# EUROPEAN PATENT APPLICATION

(11) **EP 4 503 874 A1**
(43) Date of publication of application: **05.02.2025**
(21) Application number: 23806834.0
(22) Date of filing: 12.05.2023
(51) Int. Cl.: H05K 5/02

(54) **CEILING DEVICE**

(30) Priority: 17.05.2022 CN 202221230008 U
(71) Applicant: Huawei Technologies Co., Ltd., Shenzhen, Guangdong 518129 (CN)
(72) Inventor: CHEN, Dengxu, Shenzhen, Guangdong 518129 (CN); YUAN, Danhui, Shenzhen, Guangdong 518129 (CN); HU, Ming, Shenzhen, Guangdong 518129 (CN)
(74) Representative: Gill Jennings & Every LLP
(86) International application number: PCT/CN2023/093758
(87) International publication number: WO 2023/221882

(57) **Abstract**

This application relates to the field of ceiling-mounting device technologies, and in particular, to a ceiling-mounting apparatus, including an apparatus body, a magnetic member, and a magnet. One end of the apparatus body is provided with a mounting hole, and the magnetic member is connected to the end that is of the apparatus body and that is provided with the mounting hole. The magnet is limited in the mounting hole, so that the magnet does not slide out of the mounting hole in a direction toward the magnetic member. The magnetic member is connected to the apparatus body by using a magnetic force between the magnetic member and the magnet. In this application, the magnet of the ceiling-mounting apparatus is limited in the mounting hole. In this way, mounting reliability of the magnet on the apparatus body can be ensured, so that the magnet does not slide out of the mounting hole in the direction toward the magnetic member, and a risk that the magnet drops from the ceiling-mounting apparatus can be avoided.

## Description

This application claims priority to Chinese Patent Application No. 202221230008.3, filed with the China National Intellectual Property Administration on May 17, 2022 and entitled "CEILING-MOUNTING APPARATUS", which is incorporated herein by reference in its entirety.

### TECHNICAL FIELD

This application relates to the field of ceiling-mounting device technologies, and in particular, to a ceiling-mounting apparatus.

### BACKGROUND

Currently, people's life has entered an intelligent era. Ceiling-mounting apparatuses such as various sensors, alarms, sound boxes, intelligent lamps, and speakers are integrated and mounted on ceilings in homes and public spaces. Some of the ceiling-mounting apparatuses usually have a magnetic decoration part that is easy to mount and disassemble, for example, a magnetic mesh cover of a ceiling-mounting sound box. For this type of ceiling-mounting apparatus, to mount the magnetic decoration part, a magnet needs to be disposed on the ceiling-mounting apparatus, and the magnetic decoration part is mounted on the ceiling-mounting apparatus by using a magnetic force of the magnet. Mounting reliability of the magnet on the ceiling-mounting apparatus in a related technology is low, and consequently the magnetic decoration part and the magnet are likely to drop together in a use process of the ceiling-mounting apparatus. This further causes a safety accident.

### SUMMARY

This application provides a ceiling-mounting apparatus, to resolve an existing problem that mounting reliability of a magnet on the ceiling-mounting apparatus is low, and consequently a magnetic decoration part and the magnet are likely to drop together in a use process of the ceiling-mounting apparatus.

This application provides a ceiling-mounting apparatus, including:
an apparatus body, where one end of the apparatus body is provided with a mounting hole;
a magnetic member, connected to the end that is of the apparatus body and that is provided with the mounting hole; and
a magnet, limited in the mounting hole, so that the magnet does not slide out of the mounting hole in a direction toward the magnetic member, and the magnetic member is connected to the apparatus body by using a magnetic force between the magnetic member and the magnet.

In a possible design, the apparatus body includes an apparatus housing, one end of the apparatus housing is provided with the mounting hole, and the mounting hole is a through hole provided in a height direction of the apparatus body.

In a possible design, the mounting hole includes a first hole and a second hole, one end of the second hole is close to the magnetic member, and the other end is connected to the first hole. An inner diameter of the first hole is greater than an inner diameter of the second hole, so that the mounting hole forms a stepped hole. The stepped hole has a stepped surface, and the magnet abuts against the stepped surface, to limit the magnet in the mounting hole.

In a possible design, the magnet includes a first magnet part, the first magnet part is accommodated in the first hole, and the first magnet part abuts against the stepped surface.

In a possible design, the magnet further includes a second magnet part, one end of the second magnet part is connected to the first magnet part, the other end is connected to the magnetic member, and the second magnet part is accommodated in the second hole.

In a possible design, a part of the second magnet part is accommodated in the second hole, and the other part extends to the outside of the second hole and is connected to the magnetic member.

In a possible design, a groove matching the second magnet part is disposed on the magnetic member.

In a possible design, the groove is an annular groove.

In a possible design, an opening is disposed on an outer side that is of the first hole and that faces the apparatus housing.

In a possible design, an inner diameter of the mounting hole gradually decreases from an end away from the magnetic member to an end close to the magnetic member.

In a possible design, an outer diameter of the magnet gradually decreases from an end away from the magnetic member to an end close to the magnetic member.

In a possible design, the magnet is fastened in the mounting hole by using a connection adhesive.

In a possible design, there are a plurality of mounting holes, and the plurality of mounting holes are arranged at intervals in a circumferential direction of the apparatus housing.

Beneficial effects of this application are as follows.

In this application, a ceiling-mounting apparatus includes an apparatus body, a magnetic member, and a magnet. One end of the apparatus body is provided with a mounting hole, and the magnet is limited in the mounting hole. In this way, mounting reliability of the magnet on the apparatus body can be ensured, so that the magnet does not slide out of the mounting hole in a direction toward the magnetic member, and a risk that the magnet drops from the ceiling-mounting apparatus can be avoided. The magnetic member is connected to the apparatus body by using a magnetic force between the magnetic member and the magnet. In a condition that the magnet can be reliably mounted on the apparatus body, the magnetic member can be stably mounted on the apparatus body under a magnetic force of the magnet. This can avoid a risk of a safety accident caused by dropping of the magnetic member. Compared with the conventional technology, in this application, in a process of mounting the magnet, use of an iron sheet is reduced, and a requirement on a magnetic force specification of the magnet can be reduced. In addition, compared with avoiding dropping of the magnet by using a magnetic attraction force between the iron sheet and the magnet, in this application, limiting the magnet by using the mounting hole is more stable and reliable. In addition, a process of mounting the magnet in the mounting hole is simple, and an assembly procedure can be simplified.

It should be understood that the foregoing general description and the following detailed description are merely examples, and cannot limit this application.

### BRIEF DESCRIPTION OF DRAWINGS

FIG. 1 is a diagram of a three-dimensional structure of a ceiling-mounting apparatus according to a related technology 1 of this application;
FIG. 2 is an exploded view of a ceiling-mounting apparatus according to a related technology 1 of this application;
FIG. 3 is an enlarged view at I in FIG. 2;
FIG. 4 is a diagram of a three-dimensional structure of a ceiling-mounting apparatus at one angle according to a related technology 2 of this application;
FIG. 5 is an enlarged view at II in FIG. 4;
FIG. 6 is an enlarged view at III in FIG. 4;
FIG. 7 is a diagram of a three-dimensional structure of a ceiling-mounting apparatus at another angle according to a related technology 2 of this application;
FIG. 8 is an enlarged view at IV in FIG. 7;
FIG. 9 is a diagram of a three-dimensional structure of a ceiling-mounting apparatus at a first angle in a first implementation according to this application;
FIG. 10 is a diagram of a three-dimensional structure of a ceiling-mounting apparatus at a second angle in a first implementation according to this application;
FIG. 11 is an enlarged view at VI in FIG. 10;
FIG. 12 is a diagram of a structure of a mounting hole and a magnet in a first matching manner according to an embodiment of this application;
FIG. 13 is a diagram of a three-dimensional structure of a ceiling-mounting apparatus in a second implementation according to this application;
FIG. 14 is an enlarged view at VIII in FIG. 13;
FIG. 15 is a diagram of a structure of a mounting hole and a magnet in a second matching manner according to an embodiment of this application;
FIG. 16 is an enlarged view at V in FIG. 9;
FIG. 17 is a diagram of a three-dimensional structure of a ceiling-mounting apparatus in a third implementation according to this application; and
FIG. 18 is an enlarged view at VII in FIG. 17.

### Reference numerals:

1': Apparatus body;
2': Magnetic member;
3': Magnet;
1": Apparatus body;
100": Mounting groove;
2": Magnetic member;
3": Magnet;
4: Iron sheet;
1: Apparatus body;
10: Mounting hole;
101: First hole;
1010: Opening;
102: Second hole;
103: Stepped surface;
11: Apparatus housing;
2: Magnetic member;
20: Groove;
3: Magnet;
31: First magnet part;
32: Second magnet part.

The accompanying drawings herein are incorporated into the specification and constitute a part of the specification, show embodiments conforming to this application, and are used together with the specification to explain a principle of this application.

### DESCRIPTION OF EMBODIMENTS

For ease of understanding technical solutions of this application, the following describes embodiments of this application in detail with reference to accompanying drawings.

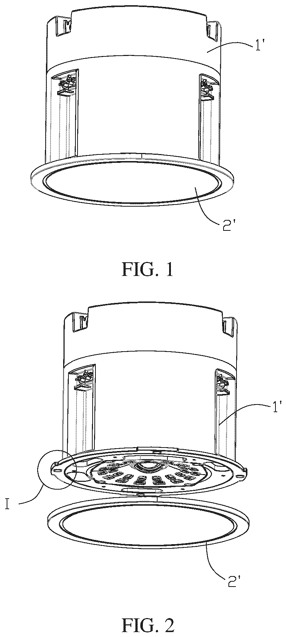

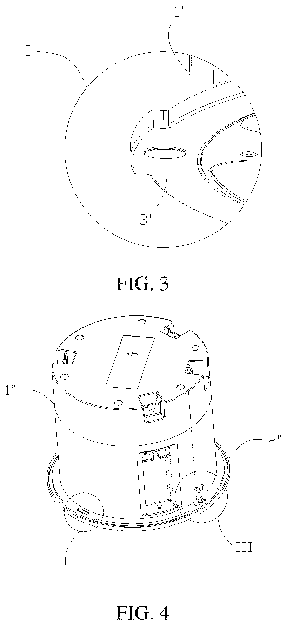

In a related technology 1, as shown in FIG. 1 to FIG. 3, FIG. 1 is a diagram of a three-dimensional structure of a ceiling-mounting apparatus, FIG. 2 is an exploded view of a ceiling-mounting apparatus, and FIG. 3 is an enlarged view at I in FIG. 2. The ceiling-mounting apparatus includes an apparatus body 1', a magnet 3', and a magnetic member 2'. The magnet 3' is mounted on the apparatus body 1', and the magnetic member 2' is connected to one end of the apparatus body 1' by using the magnet 3'. The magnetic member 2' may be a mesh cover. The magnetic member 2' is usually made of an iron material or has an iron component, and can generate attraction effect with the magnet 3', to implement magnetic mounting of the magnetic member 2' on the apparatus body 1'. The magnet 3' is usually fastened on the apparatus body 1' through dispensing. However, if the ceiling-mounting apparatus is used for a long time or works in harsh conditions, there is a risk that the magnet 3' drops due to adhesive failure.

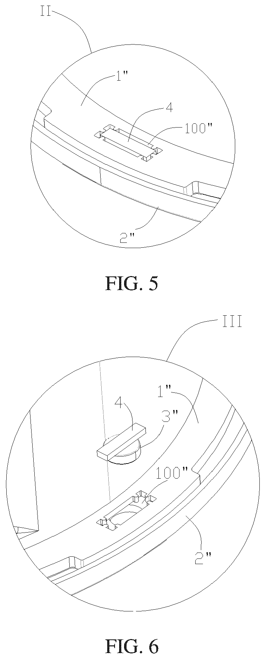

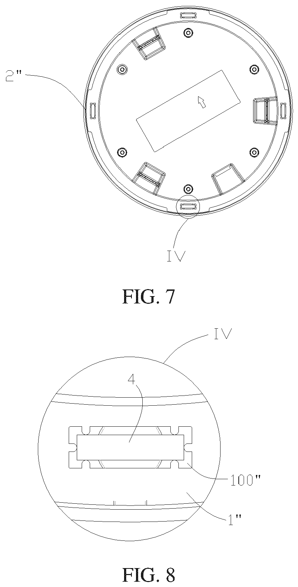

In a related technology 2, as shown in FIG. 4 to FIG. 8, a ceiling-mounting apparatus includes an apparatus body 1", an iron sheet 4, a magnet 3", and a magnetic member 2". The apparatus body 1" is provided with a mounting groove 100", the iron sheet 4 is clamped into the mounting groove 100", the magnet 3" is connected to the iron sheet 4, and then dispensing is performed in the mounting groove 100", to implement bonding between the magnet 3" and the apparatus body 1", between the apparatus body 1" and the iron sheet 4, and between the iron sheet 4 and the magnet 3". For such a structure, because the apparatus body 1" holds the iron sheet 4 and the magnet 3" attracts the iron sheet 4, the magnet 3" does not drop from a housing even if the dispensing fails. However, a mounting process between the magnet 3" and the iron sheet 4 is complex. This results in high costs of the entire apparatus. In addition, the magnet 3" needs to attract the lower heavy magnetic member 2", and needs to implement anti-dropping by using an attraction force between the magnet 3" and the iron sheet 4. If a magnetic force is insufficient, anti-dropping effect cannot be achieved. Therefore, a magnet 3" with a high specification needs to be selected to ensure a sufficient magnetic force.

To resolve the foregoing technical problem existing in a ceiling-mounting apparatus in the conventional technology, this application provides a ceiling-mounting apparatus. The ceiling-mounting apparatus may be used on ceilings in homes and public spaces.

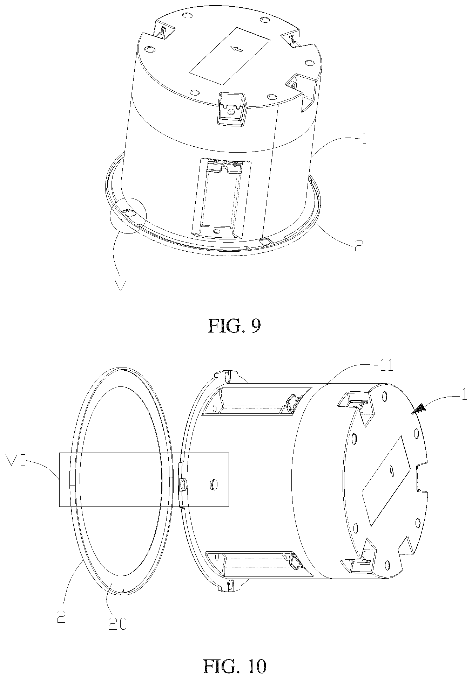

As shown in FIG. 9 to FIG. 11, the ceiling-mounting apparatus includes an apparatus body 1, a magnetic member 2, and a magnet 3. The apparatus body 1 may be various sensors, alarms, intelligent lamps, speakers, and the like. One end of the apparatus body 1 is provided with a mounting hole 10, and the magnet 3 is limited in the mounting hole 10. In this way, mounting reliability of the magnet 3 on the apparatus body 1 can be ensured, so that the magnet 3 does not slide out of the mounting hole 10 in a direction toward the magnetic member 2, and a risk that the magnet 3 drops from the ceiling-mounting apparatus can be avoided. The magnetic member 2 is connected to the apparatus body 1 by using a magnetic force between the magnetic member 2 and the magnet 3. In a condition that the magnet 3 can be reliably mounted on the apparatus body 1, the magnetic member 2 can be stably mounted on the apparatus body 1 under a magnetic force of the magnet 3. This can avoid a risk of a safety accident caused by dropping of the magnetic member 2. Compared with the conventional technology, in this application, in a process of mounting the magnet 3, use of an iron sheet is reduced, device costs can be reduced, and a requirement on a magnetic force specification of the magnet 3 can be further reduced. In addition, compared with avoiding dropping of the magnet by using a magnetic attraction force between the iron sheet and the magnet 3, in this application, limiting the magnet 3 by using the mounting hole 10 is more stable and reliable. In addition, a process of mounting the magnet 3 in the mounting hole 10 is simple, and an assembly procedure can be simplified.

Specifically, a cross section of the mounting hole may be a circle, a square, a polygon, or the like, and a shape of the mounting hole may be a shape or a structure that has a limiting function, such as a stepped hole or a tapered hole.

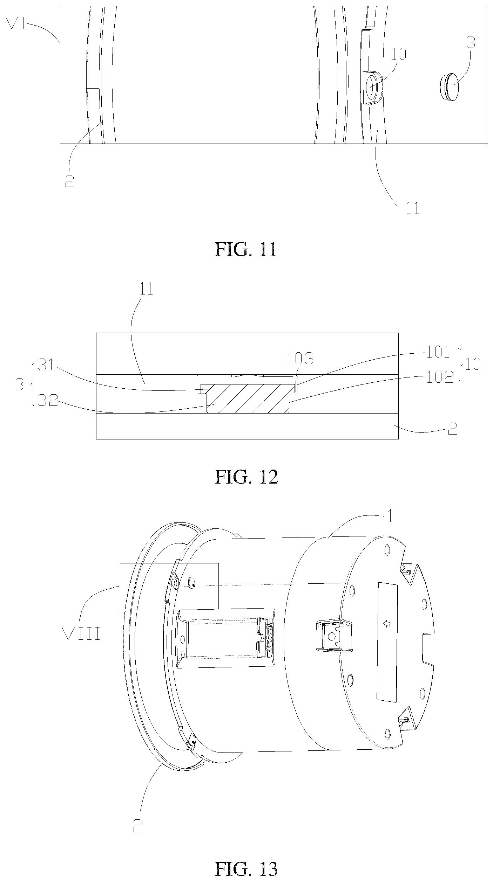

Specifically, as shown in FIG. 10 and FIG. 11, the apparatus body 1 includes an apparatus housing 11, and one end of the apparatus housing 11 is provided with the mounting hole 10. To ensure that a stronger magnetic attraction force exists between the magnet 3 and the magnetic member 2, the mounting hole 10 is a through hole provided in a height direction of the apparatus body 1. In this way, the magnet 3 is mounted in the mounting hole 10, and the magnetic attraction force between the magnetic member 2 and the magnet 3 is not reduced due to impact of another object. This can better ensure connection stability between the magnetic member 2 and the magnet 3.

According to some specific embodiments of this application, as shown in FIG. 12, the mounting hole 10 may be a stepped hole. Specifically, the mounting hole 10 includes a first hole 101 and a second hole 102. One end of the second hole 102 is close to the magnetic member 2, and the other end is connected to the first hole 101. In some specific embodiments, the cross section of the mounting hole 10 is a circle, and an inner diameter of the first hole 101 is greater than an inner diameter of the second hole 102, so that the mounting hole 10 forms a stepped hole. The stepped hole has a stepped surface 103, and the magnet 3 abuts against the stepped surface 103, so that the magnet 3 is limited in the mounting hole 10. In this way, it can be ensured that the magnet 3 does not slide out of the mounting hole 10 in the direction toward the magnetic member 2.

In some specific embodiments, as shown in FIG. 13 to FIG. 15, the magnet 3 includes a first magnet part 31, the first magnet part 31 is accommodated in the first hole 101, and the first magnet part 31 abuts against the stepped surface 103. To achieve more stable mounting effect, a shape of the first magnet part 31 may be consistent with a shape of the first hole 101. For example, when a cross section of the shape of the first hole 101 is a circle, a cross section of the first magnet part 31 may also be a circle, and certainly may be not limited to a circle, or may be a square, a polygon, or the like. It may be understood that, when the cross section of the shape of the first hole 101 is a circle, and the cross section of the first magnet part 31 is also a circle, an outer diameter of the first magnet part 31 is greater than the inner diameter of the second hole 102, and is less than the inner diameter of the first hole 101, so that the first magnet part 31 can abut against the stepped surface 103, and the first magnet part 31 falls into the first hole 101 and slides out of the mounting hole 10.

In some specific embodiments, to make the magnet 3 closer to the magnetic member 2, so as to attract the magnetic member 2 more stably, as shown in FIG. 12, the magnet 3 further includes a second magnet part 32. One end of the second magnet part 32 is connected to the first magnet part 31, and the other end is connected to the magnetic member 2. The second magnet part 32 is accommodated in the second hole 102. Optionally, an outer diameter of the second magnet part 32 may be less than or equal to the inner diameter of the second hole 102. To increase a contact area between the second magnet part 32 and the magnetic member 2 and ensure mounting stability of the magnet 3 in the mounting hole 10, the outer diameter of the second magnet part 32 is equal to the inner diameter of the second hole 102. In this way, the magnet 3 does not easily shake back and forth in the mounting hole 10. This avoids unstable contact between the magnet 3 and the magnetic member 2 caused by shaking of the magnet 3.

In some specific embodiments, to make the magnet 3 contact the magnetic member 2, so as to attract the magnetic member 2 more stably, as shown in FIG. 12, a part of the second magnet part 32 is accommodated in the second hole 102, and the other part extends to the outside of the second hole 102 and is connected to the magnetic member 2. In this way, the second magnet part 32 extending to the outside of the second hole 102 can fully contact the magnetic member 2, so that the connection between the second magnet part 32 and the magnetic member 2 is more stable.

In some specific embodiments, to achieve more tight mounting effect between the magnetic member 2 and the apparatus body 1, as shown in FIG. 10, a groove 20 matching the second magnet part 32 is disposed on the magnetic member 2. In this way, the second magnet part 32 extending to the outside of the second hole 102 can be accommodated in the groove 20, and does not occupy a space in the height direction, so that the magnetic member 2 is more closely connected to the apparatus body 1. This avoids that a gap is generated between the magnetic member 2 and the apparatus body 1, an external object can be inserted along the gap, and a magnetic connection between the magnetic member 2 and the magnet 3 is affected. In addition, the second magnet part 32 extending to the outside of the second hole 102 can be accommodated in the groove 20. In addition to a surface of the second magnet part 32 that faces the second magnet part 32 and that contacts the magnetic member 2, a side wall that is of the second magnet part 32 and that extends to the outside of the second hole 102 can also partially or completely contact the magnetic member 2. This increases the contact area and the magnetic attraction force, and ensures the connection stability between the magnetic member 2 and the magnet 3. In some specific embodiments, the groove 30 is an annular groove. In some other specific embodiments, a quantity of the grooves 30 is consistent with a quantity of the magnets 3, and corresponds to a location of the magnet 3. A shape of the groove 30 may be consistent with a shape of the second magnet part 32, so that the second magnet part 32 is better accommodated in the groove 30.

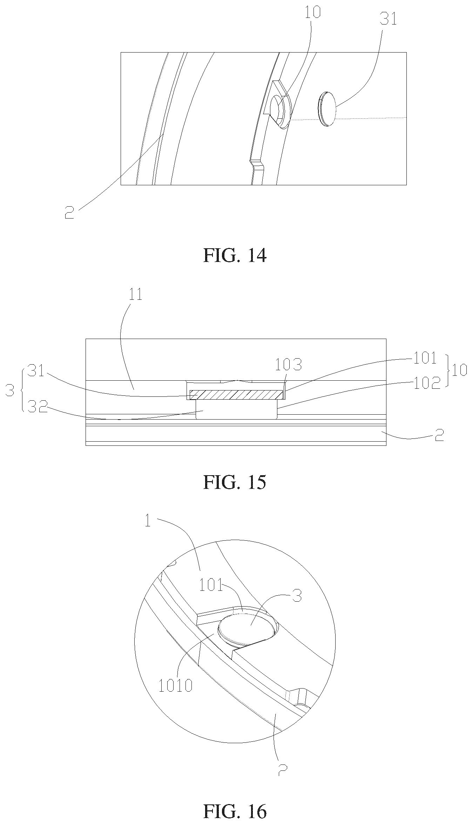

In some specific embodiments, to facilitate mounting and removal of the magnet 3 in the mounting hole 10, as shown in FIG. 16, an opening 1010 is disposed on an outer side that is of the first hole 101 and that faces the apparatus housing 11. The magnet 3 is conveniently placed in the mounting hole 10 along the opening 1010, and the magnet 3 is also conveniently removed from the mounting hole 10.

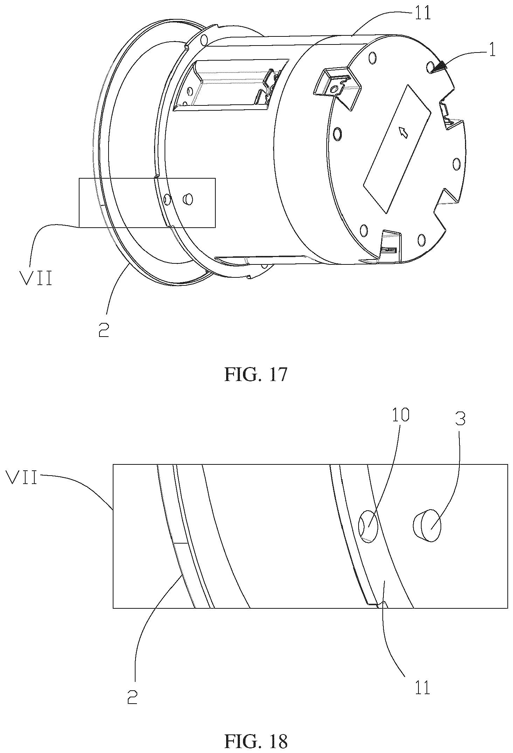

In some specific embodiments, as shown in FIG. 17 and FIG. 18, the mounting hole 10 may alternatively be a tapered hole. Specifically, an inner diameter of the mounting hole 10 gradually decreases from an end away from the magnetic member 2 to an end close to the magnetic member 2.

To match a shape of the tapered hole, so that the magnet 3 can be stably mounted in the mounting hole 10, an outer diameter of the magnet 3 gradually decreases from an end away from the magnetic member 2 to an end close to the magnetic member 2.

To ensure stability of the magnet 3 in the mounting hole 10, during mounting, the magnet 3 is fastened in the mounting hole 10 by using a connection adhesive. Specifically, after the magnet 3 is placed in the mounting hole 10, dispensing may be performed in the mounting hole 10 to implement bonding between the magnet 3 and the apparatus housing 11.

To improve connection stability between the magnet 3 and the magnetic member 2, there may be a plurality of mounting holes 10, and the plurality of mounting holes 10 are arranged at intervals in a circumferential direction of the apparatus housing 11, so that the magnetic member 2 is subject to a magnetic force of the magnet 3 in the circumferential direction, and is stably attracted and attached to one end of the apparatus body 1.

The foregoing descriptions are merely preferred embodiments of this application, and are not intended to limit this application. For a person skilled in the art, this application may have various modifications and variations. Any modification, equivalent replacement, or improvement made without departing from the spirit and principle of this application shall fall within the protection scope of this application.

## Claims

1. A ceiling-mounting apparatus, comprising:
an apparatus body (1), wherein one end of the apparatus body (1) is provided with a mounting hole (10);
a magnetic member (2), connected to the end that is of the apparatus body (1) and that is provided with the mounting hole (10); and
a magnet (3), limited in the mounting hole (2), so that the magnet (3) does not slide out of the mounting hole (10) in a direction toward the magnetic member (2), wherein the magnetic member (2) is connected to the apparatus body (1) through a magnetic force between the magnetic member (2) and the magnet (3).

2. The ceiling-mounting apparatus according to claim 1, wherein the apparatus body (1) comprises an apparatus housing (11), one end of the apparatus housing (11) is provided with the mounting hole (10), and the mounting hole (10) is a through hole provided in a height direction of the apparatus body (1).

3. The ceiling-mounting apparatus according to claim 2, wherein the mounting hole (10) comprises a first hole (101) and a second hole (102), one end of the second hole (102) is close to the magnetic member (2), and the other end is connected to the first hole (101); an inner diameter of the first hole (101) is greater than an inner diameter of the second hole (102), so that the mounting hole (10) forms a stepped hole; and the stepped hole has a stepped surface (103), and the magnet (3) abuts against the stepped surface (103), to limit the magnet (3) in the mounting hole (10).

4. The ceiling-mounting apparatus according to claim 3, wherein the magnet (3) comprises a first magnet part (31), the first magnet part (31) is accommodated in the first hole (101), and the first magnet part (31) abuts against the stepped surface (103).

5. The ceiling-mounting apparatus according to claim 4, wherein the magnet (3) further comprises a second magnet part (32), one end of the second magnet part (32) is connected to the first magnet part (31), the other end is connected to the magnetic member (2), and the second magnet part (32) is accommodated in the second hole (102).

6. The ceiling-mounting apparatus according to claim 5, wherein a part of the second magnet part (32) is accommodated in the second hole (102), and the other part extends to the outside of the second hole (102) and is connected to the magnetic member (2).

7. The ceiling-mounting apparatus according to claim 6, wherein a groove (20) matching the second magnet part (32) is disposed on the magnetic member (2).

8. The ceiling-mounting apparatus according to claim 7, wherein the groove (20) is an annular groove.

9. The ceiling-mounting apparatus according to claim 3, wherein an opening (1010) is disposed on an outer side that is of the first hole (101) and that faces the apparatus housing (11).

10. The ceiling-mounting apparatus according to claim 2, wherein an inner diameter of the mounting hole (10) gradually decreases from an end away from the magnetic member (2) to an end close to the magnetic member (2).

11. The ceiling-mounting apparatus according to claim 10, wherein an outer diameter of the magnet (3) gradually decreases from an end away from the magnetic member (2) to an end close to the magnetic member (2).

12. The ceiling-mounting apparatus according to claim 1, wherein the magnet (3) is fastened in the mounting hole (10) by using a connection adhesive.

13. The ceiling-mounting apparatus according to claim 2, wherein there are a plurality of mounting holes (10), and the plurality of mounting holes (10) are arranged at intervals in a circumferential direction of the apparatus housing (11).
